Europäisches Patentamt

European Patent Office

Office européen des brevets

(11) Veröffentlichungsnummer : **0 208 887**
**B1**

(12) # EUROPÄISCHE PATENTSCHRIFT

(45) Veröffentlichungstag der Patentschrift :
**17.05.89**

(21) Anmeldenummer : **86107436.7**

(22) Anmeldetag : **02.06.86**

(51) Int. Cl.⁴ : **A 47 L   9/24, F 16 L 37/12**

(54) **Rohrverbindung.**

(30) Priorität : **12.07.85 DE 3524987**

(43) Veröffentlichungstag der Anmeldung :
**21.01.87 Patentblatt 87/04**

(45) Bekanntmachung des Hinweises auf die Patenterteilung : **17.05.89 Patentblatt 89/20**

(84) Benannte Vertragsstaaten :
**AT BE CH DE FR GB IT LI LU NL SE**

(56) Entgegenhaltungen :
**CH–A–   438 607**
**DE–A– 2 732 493**
**FR–A– 2 025 832**
**GB–A– 1 191 438**
**US–A– 2 102 802**
**US–A– 3 245 698**

(73) Patentinhaber : **Progress Elektrogeräte GmbH**
**Lauterstrasse 8 Postfach 1869**
**D-7440 Nürtingen 10 (DE)**

(72) Erfinder : **Jacob, Gernot**
**Stahlbühlstrasse 35**
**D-7251 Weissach-Flacht (DE)**
Erfinder : **Radom, Leon**
**Kesselenstrasse 26**
**D-7101 Ellhofen (DE)**

(74) Vertreter : **Patentanwälte Kirschner & Grosse**
**Forstenrieder Allee 59**
**D-8000 München 71 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft eine Rohrverbindung, insbesondere für Staubsauger, gemäß dem Oberbegriff des Anspruchs 1.

Aus der DE-A-27 32 493 ist bereits eine Rohrverbindung mit den im Oberbegriff des Patentanspruchs angegebenen Merkmalen bekannt. Die beiden federnd verformbaren Zungen, die hinter einen Arretiersteg greifen können, sind einander gegenüberliegend an dem Rohr angeordnet, so daß eine Arretierung auf beiden Seiten des Rohres erfolgt. Dies führt zu einer symmetrischen, auf die Rohrachse gerichteten Kraftverteilung. Eine Verdrehsicherung der beiden Rohrteile gegeneinander wird bei dieser bekannten Rohrverbindung dadurch erreicht, daß die Zungen jeweils seitlich an den Arretierstegen gehalten sind. Das weibliche Kupplungsteil dieser bekannten Rohrverbindung hat eine im wesentlichen trichterförmige Struktur, so daß diese Rohrverbindung nicht in der Weise eingesetzt werden kann, daß sie mit den zu verbindenden Rohrteilen nur an deren Außenfläche in Verbindung steht und hier eine einfache Handentriegelung ermöglicht.

Aus der US-A-3 245 698 ist eine Rohrverbindung für Staubsaugerrohre bekannt, die asymmetrisch ausgestaltet ist und mit einer einzigen, an einem Rohrteil angebrachten federnden Zunge auskommt, die einen Raststeg am anderen Rohrteil im eingesteckten Zustand hintergreifen kann. Eine symmetrische Krafteinleitung wird bei dieser Rohrverbindung ebensowenig gewährleistet, wie eine ausreichende Verdrehsicherung.

Im Hinblick auf diesen Stand der Technik liegt der vorliegenden Erfindung die Aufgabe zugrunde, eine Rohrverbindung der eingangs genannten Art so weiterzubilden, daß bei symmetrischer, auf die Rohrachse gerichteter Kraftverteilung eine gegenseitige Verdrehsicherung der zu verbindenden Rohre mit einer einfachen, leicht von Hand lösbaren Struktur erreicht wird.

Diese Aufgabe wird bei einer Rohrverbindung gemäß dem Oberbegriff des Anspruchs 1 durch das im kennzeichnenden Teil des Anspruchs 1 angegebene Merkmal gelöst.

Da bei der erfindungsgemäßen Rohrverbindung sowohl die Arretierstege als auch die federnden Zungen beim Zusammensetzen der Rohre sichtbar sind, entfällt bei dieser Ausbildung die zeitraubende und lästige Suche der Raststellung. Die Rohrverbindung ist ebenso leicht wieder zu lösen, da hierzu lediglich die die Arretierstege hintergreifenden, federnden Zungen außer Eingriff mit den Arretierstegen gebracht zu werden brauchen, wozu lediglich die relativ geringe Federkraft der Zungen überwunden werden muß.

Mit Vorteil ist vorgesehen, daß die Arretierstege in axialer Richtung des Rohres konisch aufeinander zulaufen, wobei ihr innerer Abstand an ihrem im wesentlichen an dem Rohrende gelegenen ersten Endabschnitt größer und an ihrem zweiten Endabschnitt kleiner als der Außenabstand der federnden Zungen ist. Beim Zusammensetzen der Rohrverbindung werden dabei die federnden Zungen, die zwischen den Arretierstegen hindurchtreten, zusammengedrückt, bis die Raststellung erreicht ist, in der sie sich infolge ihrer Federkraft wieder auseinanderbewegen und die Arretierstege sicher und zuverlässig hintergreifen.

Mit großem Vorteil ist ferner vorgesehen, daß die Zungen in ihrem axial mittleren Bereich jeweils eine Aussparung aufweisen, die in — relativ betrachtet — in Raststellung der zugehörige Arretiersteg eintritt, wobei eine den vorderen Endabschnitt der Zunge bildende, stufenförmig verbreiterte Taste mit einer zur Rohrachse im wesentlichen senkrecht verlaufenden rückwärtigen Stirnfläche dem abgewinkelten Randabschnitt des zugehörigen Arretierstegs gegenüberliegt. Beim Zusammensetzen der zu verbindenden Rohre tritt bei dieser Ausbildung die vordere stufenförmig verbreiterte Taste zwischen den konisch aufeinander zulaufenden Arretierstegen hindurch, wobei diese zusammen mit den nachfolgenden Abschnitten der federnden Zungen aufeinander zubewegt werden. Wenn dabei die rückwärtige Stirnfläche der Tasten den hinteren abgewinkelten Randabschnitt der Arretierstege erreicht, können sich die Zungen infolge ihrer Federkraft in ihre Ausgangslage zurückbewegen, da die Arretierstege bei dieser Bewegung der Zungen in die dafür vorgesehenen Aussparungen eintreten können. In dieser Raststellung liegen die rückwärtigen Stirnflächen der Tasten den abgewinkelten Randabschnitten der Arretierstege gegenüber, wodurch die Rohrverbindung zuverlässig aufrechterhalten ist. Die Raststellung kann auf einfache und bequeme Weise dadurch gelöst werden, daß die Tasten zusammengedrückt, d. h. aufeinander zubewegt werden, wobei in dieser Stellung die Zungen wieder zwischen den Arretierstegen austreten können.

Zweckmäßigerweise tritt der Arretiersteg in Raststellung mit geringfügigem Spiel in die Aussparung der zugehörigen Zunge ein. Die Tasten sind ferner zweckmäßigerweise in Raststellung von der Außenseite des gegenüberliegenden Rohres derart beabstandet, daß sie zur Freigabe der Rohrverbindung aufeinander zu bewegbar sind, ohne mit der Außenseite des Rohres in Berührung zu gelangen. Dadurch können die Tasten bequem nach innen gebogen werden, ohne daß dieser Vorgang auf ein Hindernis stößt.

Eine besondere Ausführungsart ist dadurch gekennzeichnet, daß an jeder Taste ein vorspringender Zapfen eingesetzt ist, während an dem gegenüberliegenden Rohr hinter den Arretierstegen ein quer zur Rohrachse verlaufender Quersteg angebracht ist, der in Raststellung von den Zapfen untergriffen wird. Diese Ausbildung hat den Vorteil, daß die Raststellung nicht durch Aufbringung einer beträchtlichen Zugkraft gelöst werden kann, die andernfalls zur Folge hätte, daß die Tasten durch entsprechende Verformung der federnden Zungen angehoben und über die Arretierstege hinweg zurückgezogen werden könnten. Bei einem derartigen unerwünschten Vorgang könnten zudem die federnden Zungen erheblich beschädigt werden. Durch den Eingriff der Zapfen unter den Quersteg wird ein Abheben der Tasten zuverlässig verhindert, wobei diese Maßnahme auch der Verdrehsicherung der beiden miteinander verbundenen Rohre dient.

In dem Rohr größeren Durchmessers kann eine ringförmige Einschubbegrenzung für das Rohr kleineren Durchmessers ausgebildet sein. Eine derartige Einschubbegrenzung stellt zudem auch der Quersteg dar, der hinter den Arretierstegen angeordnet sein kann.

Es ist zweckmäßig, den Rohrstutzen des Staubsaugergehäuses als Rohr mit dem größeren Durchmesser der Rohrverbindung, das mit den Arretierstegen versehen ist, auszubilden.

Nach einem weiteren Vorschlag können die Zungen, die Arretierstege und der Quersteg ebenso wie die zugehörigen Rohre aus einem Kunststoff bestehen und einstückig mit diesen ausgebildet sein. Damit können bei einem Staubsauger die Rohre aus demselben Material bestehen wie das Staubsaugergehäuse und der Staubsaugergriff.

Weitere Vorteile und Einzelheiten der Erfindung ergeben sich aus der nachfolgenden Beschreibung einiger bevorzugter Ausführungsformen sowie anhand der Zeichnung. Dabei zeigen :

Fig. 1 in einer perspektivischen Darstellung eine Ausführungsform der erfindungsgemäßen Rohrverbindung vor dem Zusammensetzen der beiden Rohre ;

Fig. 2 in einer schematischen Ansicht von unten die Rohrverbindung gemäß Fig. 1 in einer Zwischenstellung beim Zusammenstecken der Rohre ;

Fig. 3 in einer schematischen Seitenansicht die Rohrverbindung gemäß Fig. 1 im zusammengesetzten Zustand ;

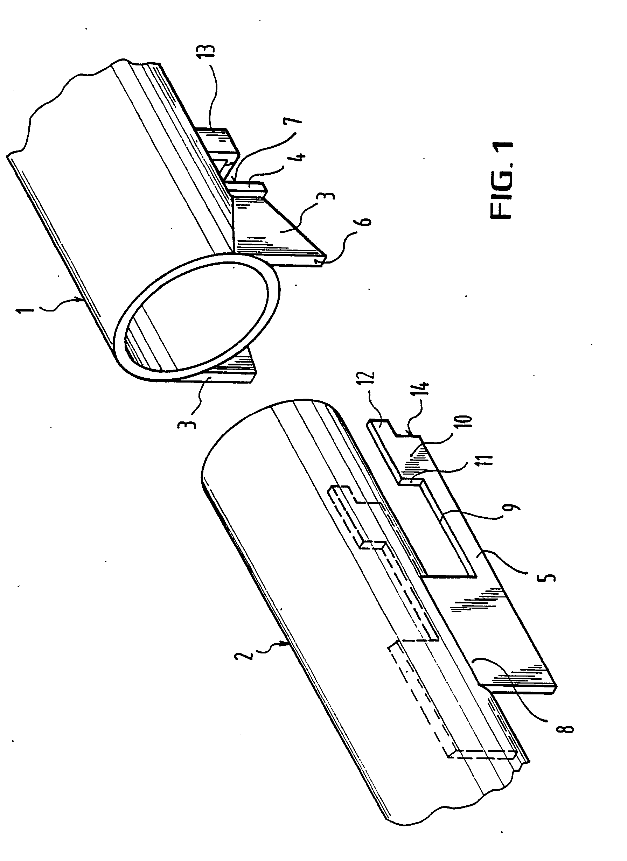

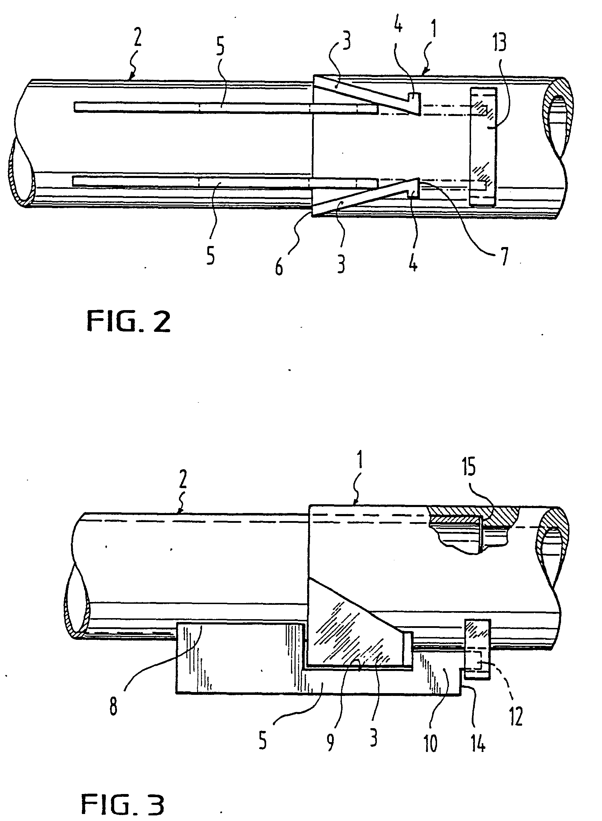

In Fig. 1 sind zwei Rohre 1 und 2 dargestellt, die miteinander verbunden werden sollen, indem das Rohr 2 kleineren Durchmessers in das Rohr 1 größeren Durchmessers eingesteckt wird. An dem Rohr 1 größeren Durchmessers sind zwei Arretierstege 3 angegossen, die in axialer Richtung des Rohres konisch aufeinander zu laufen, wie insbesondere aus Fig. 2 zu ersehen ist. Die Arretierstege 3 haben an ihrem dem Rohrende abgewandten Endabschnitt jeweils einen nach außen abgewinkelten Randabschnitt 4, der als Rastanschlag dient.

An dem Rohr 2 kleineren Durchmessers sind zwei federnde Zungen 5 angeformt, die im wesentlichen parallel zueinander und zu der Rohrachse angeordnet sind. Die federnden Zungen 5 haben einen Abstand voneinander, der kleiner als der Abstand der konisch zulaufenden Arretierstege 3 an deren an dem Rohrende gelegenen ersten Endabschnitt 6, jedoch größer als der Abstand der Arretierstege 3 an deren hinteren Endabschnitt 7 ist. Wenn das Rohr 2 zur Herstellung der Rohrverbindung in das Rohr 1 eingeschoben wird, treten die federnden Zungen 5 in den Zwischenraum zwischen den beiden Arretierstegen 3 ein, wobei sie allmählich zusammengedrückt werden, wie dies aus Fig. 2 zu ersehen ist.

Die federnden Zungen 5 sind an ihrem von dem Rohrende abgewandten Endabschnitt 8 an dem Rohr 2 angesetzt und erstrecken sich von dort frei in Richtung des Rohrendes. In ihrem axial mittleren Bereich haben die federnden Zungen 5 jeweils eine Aussparung 9, die derart bemessen ist, daß in Raststellung der zugehörige Arretiersteg 3 relativ betrachtet in diese Aussparung 9 eintreten kann, wenn die zuvor einwärts gebogenen federnden Zungen 5 wieder ihre ursprüngliche Ausrichtung einnehmen.

Die federnden Zungen 5 weisen ferner eine vordere stufenförmig verbreitete Taste 10 auf, deren rückwärtige Stirnfläche 11 in Raststellung an dem abgewinkelten Randabschnitt 4 des zugehörigen Arretiersteges 3 anliegt. Damit ist die Aufrechterhaltung der Rohrverbindung sichergestellt. Wenn die Rohrverbindung dagegen gelöst werden soll, werden die Tasten 10 lediglich so weit aufeinander zu bewegt, daß sie nicht mehr dem abgewinkelten Randabschnitt 4 der Arretierstege 3 gegenüberliegen, woraufhin das Rohr 2 aus dem Rohr 1 und die federnden Zungen 5 zwischen den Arretierstegen 3 herausgezogen werden können.

An den Tasten 10 ist jeweils ein vorspringender Zapfen 12 angeformt, der in Raststellung einen hinter den Arretierstegen 3 angesetzten, quer zur Achse des Rohres 1 verlaufenden Quersteg untergreift. Dabei verläuft die der Oberseite des Rohres 2 zugewandte Oberkante des Zapfens 12 bündig mit der Oberkante der Taste 10.

Die vorderen Stirnflächen 14 der Tasten 10 bilden zusammen mit dem Quersteg 13 eine Einschubbegrenzung für das Rohr 2. Als weitere Einschubbegrenzung ist in dem Rohr 1 eine ringförmige Einschubbegrenzung 15 ausgebildet.

## Patentansprüche

1. Rohrverbindung, insbesondere zwischen einem Rohrstutzen oder Verbindungsrohr eines Staubsaugergehäuses und einem Rohrstutzen oder Verbindungsrohr eines Staubsaugergriffes, einer Düse oder eines Vorsatzgerätes, bei der eines der zu verbindenden Rohre in das andere Rohr eingesteckt wird, mit einer Rasteinrichtung zur Aufrechterhaltung und Verdrehsicherung der Rohrverbindung, wobei die Rasteinrichtung zwei an ihren Enden an der Außenseite des einen Rohrs (2) gelagerte, seitlich verformbare, parallel zur Rohrachse angeordnete federnde Zungen (5) sowie zwei an der Außenseite des anderen Rohrs (1) angeordnete, von der jeweiligen Zunge hintergreifbare Arretierstege (3) umfaßt, wobei sich die Zungen frei in Richtung auf das Ende des Rohrs (2) erstrecken, dadurch gekennzeichnet, daß die Zungen (5) beide an einer Seite des Rohrs (2) angeordnet sind und daß die Arretierstege (3) beide an einer Seite des anderen Rohrs (1) angeordnet sind und einen Freiraum zur Durchführung der Zungen (5) bilden, dessen Breite geringer ist, als die unverformte Breite der Zungen (5).

2. Rohrverbindung nach Anspruch 1, dadurch gekennzeichnet, daß die Arretierstege (3) in axialer Richtung des Rohres (1) konisch aufeinander zulaufen, wobei ihr innerer Abstand an ihrem im wesentlichen an dem Rohrende gelegenen ersten Endabschnitt (6) größer und an ihrem zweiten Endabschnitt (7) kleiner als der Außenabstand der federnden Zungen (5) ist.

3. Rohrverbindung nach Anspruch 2, dadurch gekennzeichnet, daß die Arretierstege (3) an dem zweiten Endabschnitt (7) jeweils einen nach außen abgewinkelten Randabschnitt (4) aufweisen, der als Rastanschlag dient.

4. Rohrverbindung nach einem der Ansprüche 1 bis 3, dadurch gekennzeichnet, daß die Zungen (5) in ihrem axial mittleren Bereich jeweils eine Aussparung (9) aufweisen, in die — relativ betrachtet — in Raststellung der zugehörige Arretiersteg (3) eintritt, wobei eine den vorderen Endabschnitt der Zunge bildende, stufenförmig verbreiterte Taste (10) mit einer zur Rohrachse im wesentlichen senkrecht verlaufenden rückwärtigen Stirnfläche (11) dem abgewinkelten Randabschnitt (4) des zugehörigen Arretierstegs gegenüberliegt.

5. Rohrverbindung nach Anspruch 4, dadurch gekennzeichnet, daß der Arretiersteg (3) in Raststellung mit geringfügigem Spiel in die Aussparung (9) der zugehörigen Zunge (5) eintritt.

6. Rohrverbindung nach Anspruch 4 oder 5, dadurch gekennzeichnet, daß die Tasten (10) in Raststellung von der Außenseite des gegenüberliegenden Rohres (1) derart beabstandet sind, daß sie zur Freigabe der Rohrverbindung aufeinander zu bewegbar sind, ohne mit der Außenseite des Rohres (1) in Berührung zu gelangen.

7. Rohrverbindung nach einem der Ansprüche 1 bis 6, ferner gekennzeichnet durch jeweils einen an jeder Taste (10) angesetzten, vorspringenden Zapfen (12) und einen hinter den Arretierstegen (3) angesetzten, quer zur Rohrachse verlaufenden Quersteg (13), der in Raststellung von den Zapfen untergriffen wird.

8. Rohrverbindung nach einem der Ansprüche 1 bis 7, dadurch gekennzeichnet, daß in dem Rohr (1) größeren Durchmessers eine ringförmige Einschubbegrenzung (15) für das Rohr (2) kleineren Durchmessers ausgebildet ist.

9. Rohrverbindung nach einem der Ansprüche 1 bis 8 an einem Staubsauger, dadurch gekennzeichnet, daß der Rohrstutzen des Staubsaugergehäuses das Rohr größeren Durchmessers ist.

10. Rohrverbindung nach einem der Ansprüche 1 bis 9, dadurch gekennzeichnet, daß die Zungen (5), die Arretierstege (3) und der Quersteg (13) ebenso wie die zugehörigen Rohre (1, 2) aus einem Kunststoff bestehen und einstückig mit diesen ausgebildet sind.

**Claims**

1. Pipe connection, particularly between a socket or connecting tube of a vacuum cleaner housing and a socket or connecting tube of a vacuum cleaner handle, of a nozzle or of an accessory device, wherein one of the pipes to be connected is inserted into the other pipe, with a click-stop arrangement for maintaining the pipe connection and protecting it against torsion, the click-stop arrangement comprising two laterally deformable resilient tongues (5) which are arranged, by their ends, on the outside of one pipe (2) parallel to the pipe axis, as well as two stop webs (3) which are adapted to be engaged by the respective tongues, said tongues extending freely toward the end of the pipe (2), characterised in that both tongues (5) are arranged on one side of the pipe (2) and that both stop webs (3) are arranged on one side of the other pipe (1) to form a free space for guiding the tongues (5) therethrough, the width of said free space being smaller than the width between the tongues (5) when they are not deformed.

2. Pipe connection according to claim 1, characterised in that the stop webs (3) extend conically with respect to each other in the axial direction of the pipe (1), their inside distance at their first end section (6) substantially disposed at the pipe end being larger and at their second end section (7) being smaller than the outside distance of the resilient tongues (5).

3. Pipe connection according to claim 2, characterised in that the stop webs (3) comprise at their second end sections (7) outwardly bent angular edge sections (4) serving as click-stop.

4. Pipe connection according to any of the claims 1 to 3, characterised in that each of the tongues (5) has a clearance (g) in its axial midsection for receiving — relatively seen — in the stop location the pertinent stop web (3), while a graduatedly enlarging press-key (10) forming the front end section of the tongue, with a backward front face (11) extending substantially perpendicularly to the pipe axis, faces the angular edge section (4) of the pertinent stop web.

5. Pipe connection according to claim 4, characterised in that in the stop location the stop web (3) enters into the clearance (9) of the pertinent tongue (5) with a slight tolerance when the stop web enters the clearance.

6. Pipe connection according to claim 4 or 5, characterised in that in the stop location the press-keys (10) are spaced from the outside of the opposite pipe (1) in a manner that for releasing the pipe connection they may be moved towards each other without coming into contact with the outside of the pipe (1).

7. Pipe connection according to any of claims 1 to 6, further characterised by a projecting tenon (12) arranged on either press-key (10) and a crossbar (13) arranged behind the stop webs (3) and extending transversely to the pipe axis, which crossbar is in engagement with the tenons when the pipe connection is in the assembled condition.

8. Pipe connection according to any of claims 1 to 7, characterised in that the pipe (1) of larger diameter includes an annular stop (15) for limiting the insertion of the pipe (2) of smaller diameter.

9. Pipe connection according to any of claims 1 to 8 on a vacuum cleaner, characterised in that the socket of the vacuum cleaner housing is the pipe having the larger diameter.

10. Pipe connection according to any of claims 1 to 9 characterised in that the tongues (5), the stop webs (3) and the crossbar (13) as well as the pertinent pipes (1, 2) are of plastic material and integral therewith.


## Revendications

1. Raccord de tuyaux, notamment entre une tubulure ou piquage pour tuyaux ou tube de jointure d'un corps d'aspirateur et une tubulure ou piquage ou tube de jointure d'une poignée d'aspirateur, d'une buse ou d'un élément adaptateur, dans lequel l'un des tuyaux à raccorder est emboîté dans l'autre tuyau, avec un dispositif d'arrêt ou de butée pour le maintien et la résistance en torsion du raccord de tuyaux, le dispositif d'arrêt comportant deux languettes élastiques (5) agencées au niveau de leurs extrémités sur le côté extérieur d'un tuyau (2) déformable latéralement, monté parallèlement à l'axe du tuyau ainsi que deux ailes d'arrêt (3) agencées sur le côté extérieur de l'autre tuyau (1), sur lequel peut s'emboîter la languette respective, les languettes s'étendant librement en direction de l'extrémité du tube (2), caractérisé en ce que les languettes (5) sont toutes deux agencées sur un côté du tube (2) et en ce que les ailes d'arrêt (3) sont toutes deux agencées sur un côté de l'autre tube (1) et forment un espace libre pour le passage des languettes (5), dont la largeur est plus petite que la largeur non déformée des languettes (5).

2. Raccord de tuyaux selon la revendication 1, caractérisé en ce que les ailes d'arrêt (3) se rapprochent de façon conique dans la direction axiale du tube (1), leur espace intérieur sur leur première découpe d'extrémité (6) située essentiellement sur l'extrémité du tube étant supérieur et sur leur seconde découpe d'extrémité (7) inférieur à la distance extérieure des languettes élastiques (5).

3. Raccord de tuyaux selon la revendication 2, caractérisé en ce que les ailes d'arrêt (3) sur la deuxième découpe d'extrémité (7) comportent respectivement une section marginale (4) repliée vers l'extérieur qui sert de butée d'arrêt.

4. Raccord de tuyaux selon l'une des revendications 1 à 3, caractérisé en ce que les languettes (5) présentent dans leur zone médiane axialement, respectivement un évidement (9), dans lequel — considéré relativement — l'aile d'arrêt correspondante (3) vient en position d'arrêt ou de crantage, une touche (10) élargie par gradin formant une découpe d'extrémité avant de la languette avec une face arrière s'étendant essentiellement perpendiculairement à l'axe du tuyau et étant opposée à la découpe marginale repliée (4) de l'aile d'arrêt correspondante.

5. Raccord de tuyaux selon la revendication 4, caractérisé en ce que l'aile d'arrêt (3) vient en position de crantage avec un léger jeu dans l'évidement (9) de la languette correspondante (5).

6. Raccord de tuyaux selon la revendication 4 ou 5, caractérisé en ce que les touches (10) en position de crantage sont agencées à une distance telle du côté extérieur du tube opposé (1) qu'elles peuvent être déplacées de façon à se rapprocher et à libérer le raccord de tuyaux sans entrer en contact avec le côté extérieur du tuyau (1).

7. Raccord de tuyaux selon l'une des revendications 1 à 6, caractérisé de plus par respectivement un talon (12) faisant saillie, rapporté sur chaque touche (10) et une aile transversale (13) s'étendant transversalement par rapport à l'axe du tube, rapportée derrière les ailes d'arrêt (3), aile transversale (13) sous laquelle vient s'engager le talon en position de crantage.

8. Raccord de tuyaux selon l'une des revendications 1 a 7, caractérisé en ce que dans le tuyau (1) de plus grand diamètre est formée une limite d'introduction (15) circulaire pour le tube (2) de plus petit diamètre.

9. Raccord de tuyaux selon l'une des revendications 1 à 8 sur un aspirateur, caractérisé en ce que la tubulure ou piquage pour tuyaux du corps d'aspirateur est constitue par le tuyau du plus grand diamètre.

10. Raccord de tuyaux selon l'une des revendications 1 à 9, caractérisé en ce que les languettes (5), les ailes d'arrêt (3) et l'aile transversale (13) ainsi que les tubes ou tuyaux correspondants (1, 2) sont réalisés en matière synthétique et forment une seule pièce avec ceux-ci.

**FIG. 1**

EP 0 208 887 B1

FIG. 2

FIG. 3